# EUROPÄISCHE PATENTANMELDUNG

(11) **EP 2 713 133 A1**
(43) Veröffentlichungstag der Anmeldung: **02.04.2014**
(21) Anmeldenummer: 13184426.8
(22) Anmeldetag: 13.09.2013
(51) Int. Cl.: F28D 20/02

(54) **Einrichtung zur Bestimmung des Ladezustands eines thermischen Speichers**

(30) Priorität: 27.09.2012 DE 202012103715 U
(71) Anmelder: Viessmann Kältetechnik GmbH, 95030 Hof / Saale (DE)
(72) Erfinder: Gebelein, Bernd, 95179 Geroldsgrün (DE); Römer, Dr. Ing., Siegfried, 01477 Arnsdorf (DE)
(74) Vertreter: Pröll, Jürgen

(57) **Zusammenfassung**

Die vorliegende Erfindung betrifft eine Einrichtung zur Bestimmung des Ladezustands eines thermischen Speichers (12) für eine Kühleinrichtung, wobei der thermische Speicher (12) einen hermetisch dichten Raum (14) aufweist, mit Mitteln zum Einstellen einer definierten Phasengrenze zwischen der festen und der flüssigen Phase eines eingebrachten Phasenwechselmaterials. Durch die bei Phasenwechsel auftretende Volumenänderung des Phasenwechselmaterials erfolgt eine Veränderung des Druckes eines in einem über der Flüssigphase des Phasenwechselmaterials angeordneten Inertgasreservoir, wobei mittels einer Messeinrichtung (10) der Ladezustand des thermischen Speichers erfassbar ist.

## Beschreibung

Die vorliegende Erfindung betrifft eine Einrichtung zur Bestimmung des Ladezustands eines thermischen Speichers.

Aus dem Stand der Technik sind verschiedene Kühleinrichtungen mit einem Kältespeicher bekannt, wobei ein Phasenwechselmaterial ("phase change material" - PCM) zum Kühlen in den Speichern aufgenommen ist. So wird beispielsweise in der WO 2012/059332 A2 ein Kältegerät mit einem Pufferspeicher beschrieben, wobei das Kältegerät eine Kältemaschine, einen durch die Kältemaschine gekühlten, ein Speicherfluid enthaltenen Pufferspeicher, wenigstens eine erste Lagerkammer und erste Mittel zum Umwälzen des Speicherfluids zwischen dem Pufferspeicher und der ersten Lagerkammer aufweist.

Ferner ist aus der DE 10 2010 030 619 A1 ein Kältegerät mit einem Kältespeicher bekannt, wobei in einem Speicher gekühltes Kältemittel bevorratet ist und eine Ventilanordnung zum Zuführen des gekühlten Kältemittels zu einem Kältemittelkreislauf in Abhängigkeit von einem Energiekriterium vorgesehen ist.

EP 0 079 452 B1 offenbart einen Energiespeicher, wobei in dem Energiespeicher ein Phasenwechselmaterial aufgenommen ist.

Bei dem aus dem Stand der Technik bekannten Kältespeichern besteht jedoch das Problem, das vor allem dann keine Aussage über den Ladezustand des Speichers gemacht werden kann, wenn das in dem Speicher aufgenommene Phasenwechselmaterial eine Temperatur aufweist, in der es sowohl seinen festen als auch seinen flüssigen Aggregatszustand aufweisen kann. Eine zuverlässige Bestimmung des Ladezustands ist daher nicht möglich.

Es ist bereits bekannt, Temperaturmesseinrichtungen in dem Speicher vorzusehen. Dadurch kann die Temperatur des Phasenwechselmaterials in dem Speicher bestimmt werden, jedoch kann keine Aussage darüber getroffen werden, zu wie viel Prozent bzw. in welchem Maß der Kältespeicher geladen/entladen ist.

Aufgabe der vorliegenden Erfindung ist es daher, eine Einrichtung zur Bestimmung des Ladezustands eines thermischen Speichers für eine Kühleinrichtung anzugeben, wobei zuverlässig eine Bestimmung des Ladezustands auf einfache Art und Weise möglich ist.

Die Aufgabe wird durch eine Einrichtung mit den im Anspruch 1 angegebenen Merkmalen gelöst. Vorteilhafte Ausführungen der Erfindung sind in den Unteransprüchen im Detail angegeben.

Bei einer erfindungsgemäßen Einrichtung zur Bestimmung des Ladezustands eines thermischen Speichers für eine Kühleinrichtung, wobei der thermische Speicher einen hermetisch dichten Raum aufweist, ist in dem Raum ein erstes Leitungssystem angeordnet und ein das erste Leitungssystem umgebendes Phasenwechselmaterial ist darin aufgenommen. Der thermische Speicher weist ferner Anschlüsse zum Verbinden des ersten Leitungssystems zur Zuführung eines ersten Kühlmittels auf, welches das Phasenwechselmaterial kühlt. Erfindungsgemäß ist darüber hinaus vorgesehen, dass an der oberen Deckenwand des Raumes des thermischen Speichers eine Messeinrichtung zur Erfassung des Ladezustands des thermischen Speichers angeordnet ist.

Durch die Messeinrichtung können Zustände in dem hermetisch abgedichteten Raum aufgenommen werden, woraus eine Bestimmung des Ladezustands möglich ist.

Die Messeinrichtung kann dazu eine Druckmesseinrichtung sein, wodurch es möglich ist, allein aufgrund der Druckmessung eine Bestimmung des Ladezustands vorzunehmen. Zur Bestimmung des Ladezustandes des Speichers können eine oder mehrere Druckmesseinrichtungen genutzt werden. Da der Raum in dem thermischen Speicher hermetisch abgedichtet ist, ändert sich der Druck in dem Raum aufgrund einer Volumenänderung des Phasenwechselmaterials, wenn dieses teilweise oder vollständig einen Wechsel des Aggregatzustandes flüssig/fest bzw. fest/flüssig vollzieht. Zur Auswertung des Ladezustandes des thermischen Speichers können bestimmte Zustände vorher aufgenommen worden sein, d. h. Aufnahme des Drucks bei einem vollständig geladenen thermischen Speicher (gesamtes Phasenwechselmaterial befindet sich in der festen Phase), einem definiert teilweise entladenen thermischen Speicher (Phasenwechselmaterial liegt sowohl in fester als auch flüssiger Phase vor) und vollständig entladenen thermischen Speicher (Phasenwechselmaterial liegt in der flüssigen Phase vor). Sind beispielsweise verschiedene Zustände des Phasenwechselmaterials (fest bzw. flüssig) aufgenommen worden und dabei der Druck, der in dem thermischen Speicher in dem Raum herrscht, aufgenommen worden, so kann anschließend im Betrieb des thermischen Speichers allein über die Messung des aktuell an der Messstelle anliegenden Drucks der Ladezustand des thermischen Speichers bestimmt werden. Die durch das PCM hervorgerufene Druckänderung wird gewissermaßen erfasst und ausgewertet.

Ferner kann das erste Leitungssystem eine Vielzahl von Leitungsabschnitten aufweisen, die sich parallel zu dem Boden des Raumes des thermischen Speichers erstrecken, wobei die Leitungsabschnitte voneinander unabhängig ausgebildet und an ihren oberen Enden im Bereich des oberen Endes des Raums mit mindestens einer Vorrichtung verbunden sind, über die den Leitungsabschnitten das erste Kühlmittel zuführbar ist. Durch die Anordnung von einer Vielzahl von Leitungsabschnitten kann das erste Kühlmittel definiert in den thermischen Speicher eingebracht werden, so dass ein Phasenwechsel des Phasenwechselmaterials in bestimmten Bereichen und in einer bestimmten Richtung erzielt wird. Vorteilhafter Weise wird durch die erfindungsgemäße Anordnung sich eine Erstarrung des Phasenwechselmaterials (Wechsel flüssig zu fest) ausgehend vom Boden des thermischen Speichers nach oben einstellen und ein Schmelzen (Wechsel fest zu flüssig) in umgekehrter Richtung stattfinden. Somit entsteht eine Schichtung, ausgehend vom Boden nach oben derart, dass zunächst festes und danach flüssiges Phasenwechselmaterial im Speicher vorhanden ist. An der Decke des hermetisch abgedichteten Raums befindet sich die Druckmesseinrichtung innerhalb eines gasförmigen Reservoirs mit Inertgas. In diesem Gasreservoir stellt sich aufgrund des sich kontinuierlich ändernden Volumenverhältnisses von fest zu flüssig des Phasenwechselmaterials ein unterschiedlicher Druck als Messgröße für den Beladungszustand des thermischen Speichers ein.

Der Raum des thermischen Speichers kann von seinem Boden bis zu seinem oberen Ende einen sich vergrößernden Querschnitt aufweisen. Dadurch wird eine Vorzugsrichtung für den Phasenwechsel des Phasenwechselmaterials bereitgestellt.

In weiteren Ausgestaltungen kann sich der Querschnitt des Raumes des thermischen Speichers von seinem Boden nach oben hin auch stufenförmig vergrößern.

Den einzelnen Leitungsabschnitten des ersten Leitungssystems kann über die Vorrichtung schrittweise das erste Kühlmittel von unten nach oben zum Kühlen des Phasenwechselmaterials in Abhängigkeit des gemessenen Drucks durch die Druckmesseinrichtung zuführbar sein. Dadurch ergibt sich eine Aufteilung der einzelnen Phasen des Phasenwechselmaterials und ein definiertes Laden des thermischen Speichers (feste Phase am Boden des Raumes des thermischen Speichers, flüssige Phase des Phasenwechselmaterials über der festen Phase und gasförmige Phase des Phasenwechselmaterials/des Inertgases im Bereich des oberen Ende des Raums des thermischen Speichers).

Der thermische Speicher besitzt weitere Anschlüsse für ein zweites Leitungssystem. Das zweite Kühlmittel nimmt dabei Wärme von dem Phasenwechselmaterial auf und wird dadurch gekühlt, wobei das zweite Kühlmittel dann über einen Verdampfer die Wärme zum Kühlen eines zu kühlenden Raumes wieder abgibt.

Das zweite Leitungssystem kann ebenso eine Vielzahl von Leitungsabschnitten aufweisen, die jeweils unabhängig voneinander ausgebildet und mit einer weiteren Vorrichtung verbunden sind, wobei über die weitere Vorrichtung die Zu- und Abführung des zweiten Kühlmittels zu und von mindestens einem der Leitungsabschnitte des zweiten Leitungssystems steuerbar ist.

Den einzelnen Leitungsabschnitten des zweiten Leitungssystems kann mittels der weiteren Vorrichtung schrittweise das zweite Kühlmittel von oben nach unten in Abhängigkeit des durch die Druckmesseinrichtung gemessenen Drucks und/oder in Abhängigkeit weiterer Parameter zuführbar sein. Die Wärmeentnahme aus dem thermischen Speicher durch das zweite Kühlmittel kann in Gegenstromrichtung zu dem ersten Kühlmittel erfolgen, welches von unten nach oben in den thermischen Speicher über die Leitungsabschnitte des ersten Leitungssystems zugeführt wird. Weitere Parameter können beispielsweise den Ladezustand des thermischen Speichers oder beispielsweise die Temperatur der Kühlmittel, des Phasenwechselmaterials und die Temperatur in dem zu kühlenden Raum umfassen.

An der oberen Deckenwand des Raums kann auch ein elastischer Körper angeordnet sein, der einen gasgefüllten, hermetisch dichten weiteren Raum bildet, wobei eine Seite des gasgefüllten, weiteren Raums von der oberen Deckenwand gebildet ist und der elastische Körper den weiteren, gasgefüllten Raum gegenüber dem mit dem Phasenwechselmaterial gefüllten Raum abdichtend trennt und in dem gasgefüllten, weiteren Raum die Druckmesseinrichtung angeordnet ist. Der elastische Körper kann beispielsweise aus einem elastischen Werkstoff bestehen. Findet nun in dem thermischen Speicher ein Phasenwechsel des Phasenwechselmaterials statt und die feste Phase des Phasenwechselmaterials nimmt zu, so wird der Druck auf den elastischen Körper erhöht, wodurch sich ebenso der Druck in dem gasgefüllten, weiteren Raum erhöht, welcher durch die Druckmesseinrichtung aufgenommen wird. Der elastische Körper kann sich beispielsweise bis zu dem Boden des Raumes erstrecken und schlauchförmige Fortsätze aufweisen, die in die flüssige und feste Phase des Phasenwechselmaterials ragen.

Die Messeinrichtung (beispielsweise die Druckmesseinrichtung) kann mit einer Steuereinheit verbunden sein, in welcher Parameter abgespeichert sind, und über welche die Steuerung der Zu- und Abfuhr des ersten und zweiten Kühlmittels über die einzelnen Leitungsabschnitte gesteuert wird.

Das Phasenwechselmaterial kann beispielsweise ein Gemisch aus Wasser und Salzen oder Alkoholen mit oder ohne weiteren Zusätzen sein.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren dargestellten Komponenten sind hierbei nicht unbedingt maßstäblich; sie können bei zu implementierenden Ausführungsformen vom Veranschaulichten abweichen.

In den Zeichnungen zeigen:
- Figur 1: eine isometrische Ansicht eines thermischen Speichers;
- Figur 2: eine Draufsicht auf den thermischen Speicher;
- Figur 3: einen Schnitt durch den in Figur 2 gezeigten thermischen Speicher; und
- Figur 4: eine schematische Ansicht des Raums des thermischen Speichers mit einer Druckmesseinrichtung und den einzelnen Phasen eines Phasenwechselmaterials.

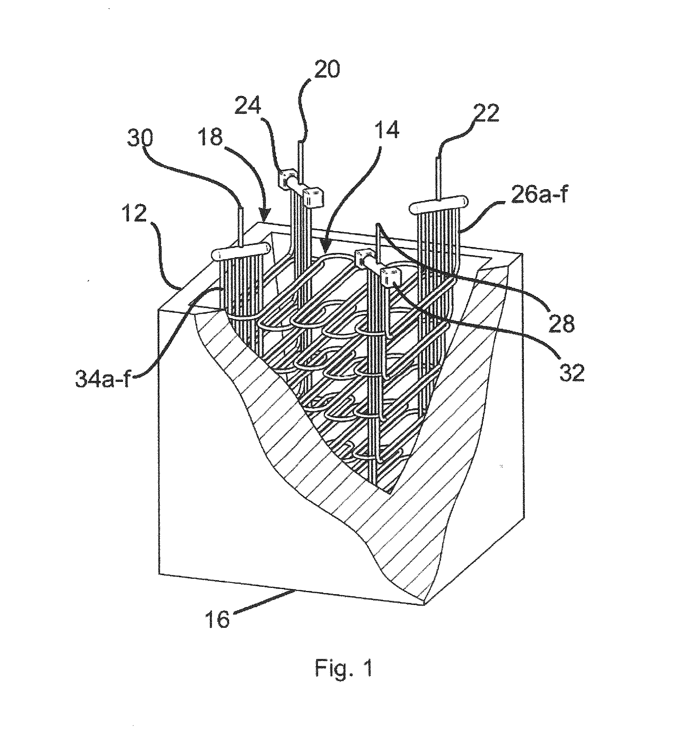

Figur 1 zeigt eine isometrische Ansicht eines thermischen Speichers 12. Der thermische Speicher 12 weist einen Raum 14 auf, wobei der Raum 14 an seinem oberen Ende 18 geschlossen und hermetisch abgedichtet ist. In Figur 1 ist der Raum 14 jedoch offen dargestellt, wobei diese Darstellung lediglich zur Vereinfachung und zur Veranschaulichung der darin aufgenommenen Komponenten dient.

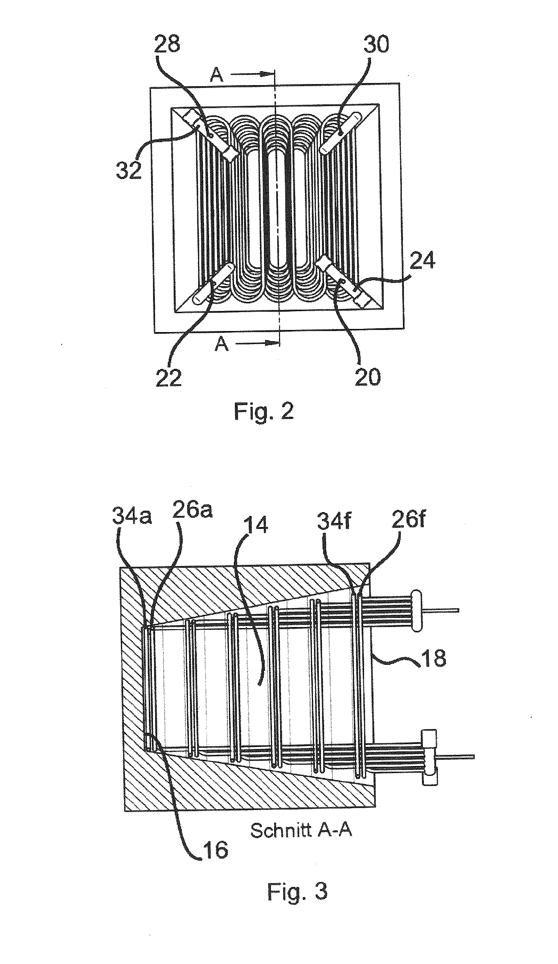

In dem Raum 14 ist ein erstes Leitungssystem mit einem Einlass 20 und einem Auslass 22 aufgenommen, das aus einer Vielzahl von Leitungsabschnitten 26a-f besteht, die parallel und beabstandet zu dem Boden 16 des Raums 14 verlaufen und angeordnet sind. Die Leitungsabschnitte 26a-f (siehe Fig. 2) sind jeweils mit einer Vorrichtung 24 verbunden. In dem Raum 14 ist ein vom ersten Leitungssystem getrenntes zweites Leitungssystem ebenfalls mit einem Einlass 28 und einem Auslass 30 aufgenommen, das aus einer Vielzahl von Leitungsabschnitten 34a-f besteht, die parallel und beabstandet zu dem Boden 16 des Raums 14 verlaufen und angeordnet sind. Das erste Kühlmittel wird über eine Vorrichtung 24 auf die einzelnen Leitungsabschnitte 26a-f verteilt. Das zweite Kühlmittel wird über eine Vorrichtung 32 auf die Leitungsabschnitte 34a-f des zweiten Leitungssystems verteilt.

Das erste Kühlmittel wird von einer Kältemaschine gekühlt, wobei die Kühlung des ersten Kühlmittels durch verschiedene bekannte Vorrichtungen bewerkstelligt werden kann. Über eine Pumpe oder andere Umwälzmittel wird das erste Kühlmittel zu dem Einlass 20 transportiert.

Über den Einlass 20 wird das erste Kühlmittel der Vorrichtung 24 zugeführt, welche das erste Kühlmittel den Leitungsabschnitten 26a-f zuführt. Das erste Kühlmittel durchströmt die von der Vorrichtung 24 ausgewählten Leitungsabschnitte 26a-f und wird dann über den Auslass 22 wieder abgeführt.

Die Vorrichtung 24 steuert dabei die Zufuhr des ersten Kühlmittels zu den jeweiligen Leitungsabschnitten 26a-f entsprechend vorher festgelegter Regeln, wobei das erste Kühlmittel stets zuerst dem Leitungsabschnitt 26a und dann den weiteren Leitungsabschnitten 26b-f zugeführt wird. Die Zuführung erfolgt dabei stufenweise.

Über den Einlass 28 wird das zweite Kühlmittel der Vorrichtung 32 zugeführt, welche das zweite Kühlmittel den Leitungsabschnitten 34a-f zuführt. Das zweite Kühlmittel durchströmt die von der Vorrichtung 32 ausgewählten Leitungsabschnitte 34a-f und wird dann über den Auslass 30 wieder abgeführt.

Die Vorrichtung 32 steuert dabei die Zufuhr des zweiten Kühlmittels zu den jeweiligen Leitungsabschnitten 34a-f entsprechend vorher festgelegter Regeln, wobei das zweite Kühlmittel stets zuerst dem Leitungsabschnitt 34f und dann den weiteren Leitungsabschnitten 34e-a zugeführt wird. Die Zuführung erfolgt dabei stufenweise.

Wie den Figuren zu entnehmen ist, weist der thermische Speicher 12 eine sich vom Boden 16 aus nach oben erweiternde Querschnittsfläche des Raums 14 auf. Der sich vergrößernde Querschnitt dient zur Bereitstellung einer "Vorzugs-Schmelz/Erstarrungs-Richtung" für das in dem Raum 14 aufgenommene Speichermedium. Das Speichermedium ist ein Phasenwechselmaterial, wodurch eine hohe Speicherdichte erreicht werden kann.

Fig. 2 zeigt eine Draufsicht auf einen thermischen Speicher 12, wobei der wendelförmige oder mäanderförmige Verlauf der Leitungsabschnitte 26a-f des ersten Leitungssystems sowie der Leitungsabschnitte 34a-f des zweiten Leitungssystems in den Ebenen dargestellt ist. Der Verlauf der Leitungsabschnitte im ersten und zweiten Leitungssystem stellt eine große Wärmeübertragungsfläche bereit.

Fig. 3 zeigt einen Schnitt durch den thermischen Speicher 12 von Fig. 2. In Fig. 3 ist dargestellt, wie die einzelnen Leitungsabschnitte 26a-f des ersten Leitungssystems sowie die Leitungsabschnitte 34a-f des zweiten Leitungssystems an die Querschnittsänderungen des Raums 14 angepasst sind. Über das erste Leitungssystem wird das in dem Raum 14 befindliche Phasenwechselmaterial mittels des ersten Kühlmittels gekühlt und somit auf eine bestimmte Temperatur gebracht, wobei ein Phasenwechsel stattfindet.

Wenn eine Kühleinrichtung mit einem thermischen Speicher 12 betrieben wird, wird zuerst über das erste Leitungssystem das in dem Raum 14 aufgenommene Phasenwechselmaterial gekühlt. Das erste Kühlmittel durchströmt die Vorrichtung 24 und die von dieser freigegebenen Leitungsabschnitte 26a-f und strömt dann zurück zu der Kältemaschine, in welcher das erste Kühlmittel wieder entsprechend gekühlt wird. Durch das Kühlen aufgrund der Durchströmung des ersten Leitungsabschnittes 26a findet ein Phasenwechsel des Phasenwechselmaterials in dem Raum 14 zuerst im bodennahen Bereich statt (bzw. gefriert das Phasenwechselmaterial zuerst im bodennahen Bereich). Dadurch stellt sich am Boden 16 des Raums 14 eine feste Phase ein, darüber eine flüssige und ganz oben befindet sich im Bereich des oberen Endes 18 des Raums 14 ein Inertgasreservoir. Über die Vorrichtung 24 wird das erste Kühlmittel sodann schrittweise den weiteren Leitungsabschnitten 26b-f zugeführt, so dass das Phasenwechselmaterial in dem Raum 14 vom Boden 16 des Raums 14 ausgehend stetig nach oben "gefriert", indem ein Phasenwechsel stattfindet. Das Zuführen des ersten Kühlmittels erfolgt dabei solange, bis der gesamte thermische Speicher 12 geladen ist. Vollständig geladen bedeutet in diesem Zusammenhang, dass das gesamte Phasenwechselmaterial in der festen Phase vorliegt.

Zum Kühlen beispielsweise eines Kühlraums wird über das zweite Leitungssystem ein zweites Kühlmittel in den Raum 14 geführt, wobei über die Vorrichtung 32 das zweite Kühlmittel zuerst durch die Leitungsabschnitte 34f des zweiten Leitungssystems geführt wird, welche sich im oberen Bereich 18 des Raums 14 befinden. Dadurch beginnt das Phasenwechselmaterial zuerst im oberen Bereich 18 des Raums 14 zu "tauen" bzw. findet ein Phasenwechsel von fest zu flüssig statt. Anschließend werden dann die weiteren Leitungsabschnitte 34e-a des zweiten Leitungssystems mit dem zweiten Kühlmittel durchströmt. Dadurch, dass das zweite Kühlmittel zuerst nur in dem oberen Bereich 18 des Raums 14 die Leitungsabschnitte des zweiten Leitungssystems durchströmt, ergibt sich ein definiertes Schmelzen des Phasenwechselmaterials (definierter Phasenwechsel von fest zu flüssig) von "oben nach unten".

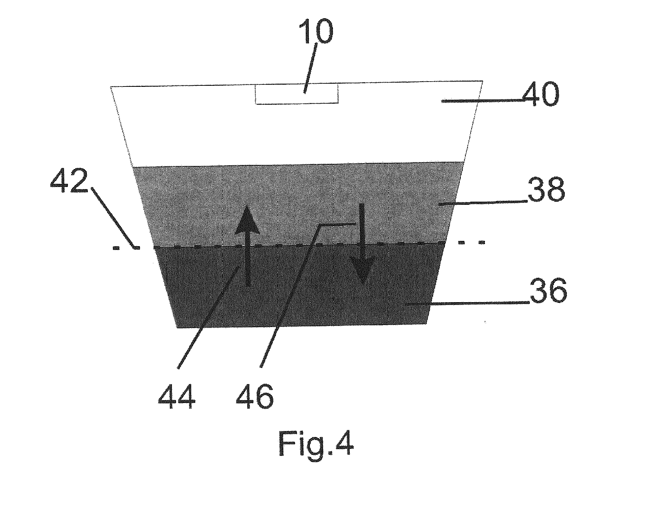

Figur 4 zeigt schematisch die Aufteilung der einzelnen Phasen des Phasenwechselmaterials in thermischen Speichern bei einem beliebig gewählten Zustand. Dabei liegt ein Teil des Phasenwechselmaterials in fester Phase 36 vor, welche sich im unteren Bereich in der Nähe des Bodens befindet. Darüber befindet sich die flüssige Phase 38 und über der flüssigen Phase 38 befindet sich ein Inertgasreservoir 40.

Durch die Reihenfolge der Durchströmung der Leitungsabschnitte des ersten Leitungssystems von "unten nach oben" sowie der Leitungsabschnitte des zweiten Leitungssystems von "oben nach unten" erfolgt ein Phasenwechsel stets in definierter Richtung in der Art, dass die Erstarrungsfront 44 stets von "unten nach oben" und die Schmelzfront 46 stets von "oben nach unten" sich bewegen.

In Figur 4 ist weiter dargestellt, dass die Druckmesseinrichtung 10 im oberen Ende des Raums innerhalb des Inertgasreservoirs 40 angeordnet ist. Aufgrund der Volumenänderung des Phasenwechselmaterials während des Phasenwechsels fest/flüssig und der erfindungsgemäß sich einstellenden Phasengrenze 42 kann die in dem Inertgasreservoir 40 befindliche Druckmesseinrichtung 10 ein proportional zum Beladungszustand, d.h. entsprechend dem Volumenverhältnis fest zu flüssig des Phasenwechselmaterials, sich einstellendes Drucksignal detektieren. Da für jeden Druck bzw. für bestimmte Druckbereiche entsprechende Ladezustände des thermischen Speichers in der Einrichtung hinterlegt sind, kann durch die Druckmesseinrichtung 10 aufgrund der Bestimmung des Drucks in dem Inertgasreservoir 40 der Beladungszustand des thermischen Speichers ermittelt werden.

Zusätzlich zu der Druckmesseinrichtung 10 können in dem thermischen Speicher auch andere Messeinrichtungen vorgesehen sein. Beispielsweise ist es möglich, zusätzlich eine Temperaturmesseinrichtung vorzusehen, so dass bestimmt werden kann, ob sich das Phasenwechselmaterial über oder unter der Umschlagstemperatur/Phasenwechseltemperatur des Phasenwechselmaterials befindet.

In weiteren Ausführungsformen sind Dehnmessstreifen bzw. kapazitive Messeinrichtungen in der Wand, die den Raum des thermischen Speichers umgeben, angeordnet. Dadurch kann beispielsweise der Druck, der auf die Raumhülle des thermischen Speichers aufgrund der Ausdehnung des Phasenwechselmaterials in der festen Phase 36 auftritt, gemessen werden.

Ein derartiger thermischer Speicher und eine Einrichtung zur Bestimmung des Ladezustands des thermischen Speichers können beispielsweise zum Kühlen begehbarer Kühlräume verwendet werden. Darüber hinaus können noch weitere Mittel vorgesehen sein, über die beispielsweise die Gemischkonzentration oder Gemischzusammensetzung des Phasenwechselmaterials in der Ausführung veränderbar ist oder aber über welche das Phasenwechselmaterial austauschbar ist. Als geeignetes Phasenwechselmaterial können beispielsweise Gemische aus Wasser und Salzen oder Alkoholen verwendet werden.

### Bezugszeichenliste

- 10: Druckmesseinrichtung
- 12: thermischer Speicher
- 14: Raum
- 16: Boden
- 18: oberes Ende
- 20: erstes Leitungssystem Einlass
- 22: erstes Leitungssystem Auslass
- 24: Vorrichtung erstes Leitungssystem
- 26a, b, c, d, e ,f: Leitungsabschnitte erstes Leitungs-system
- 28: zweites Leitungssystem Einlass
- 30: zweites Leitungssystem Auslass
- 32: Vorrichtung zweites Leitungssystem
- 34a, b, c, d, e ,f: Leitungsabschnitte zweites Leitungs-system
- 36: feste Phase
- 38: flüssige Phase
- 40: Inertgasreservoir
- 42: Phasengrenze fest/flüssig
- 44: Richtung der Erstarrungsfront
- 46: Richtung der Schmelzfront

## Patentansprüche

1. Einrichtung zur Bestimmung des Ladezustands eines thermischen Speichers (12) für eine Kühleinrichtung, wobei der thermische Speicher (12) einen hermetisch dichten Raum (14) aufweist, mit Mitteln zum Einstellen einer definierten Phasengrenze zwischen der festen und der flüssigen Phase eines eingebrachten Phasenwechselmaterials, wobei durch die bei Phasenwechsel auftretende Volumenänderung des Phasenwechselmaterials eine Veränderung des Druckes eines in einem über der Flüssigphase des Phasenwechselmaterials angeordneten Inertgasreservoirs erfolgt, wobei mittels einer Messeinrichtung (10) der Ladezustand des thermischen Speichers erfassbar ist.

2. Einrichtung nach Anspruch 1, wobei die Messeinrichtung eine Druckmesseinrichtung (10) ist.

3. Einrichtung nach Anspruch 1 oder 2, wobei ein erstes Leitungssystem eine Vielzahl von Leitungsabschnitten (26a-f) aufweist, die sich parallel zu dem Boden (16) des Raumes (14) des thermischen Speichers (12) erstrecken, wobei die Leitungsabschnitte (26a-f) voneinander unabhängig ausgebildet sind und an ihren oberen Enden im Bereich des oberen Endes (18) des Raumes (14) mit einer Vorrichtung (24) verbunden sind, über die den Leitungsabschnitten (26a-f) schrittweise das erste Kühlmittel von unten nach oben in Abhängigkeit des gemessenen Drucks durch die Druckmesseinrichtung (10) zum Kühlen des Phasenwechselmaterials zuführbar ist.

4. Einrichtung nach einem der Ansprüche 1 bis 3, wobei ein zweites Leitungssystem eine Vielzahl von Leitungsabschnitten (34a-f) aufweist, die sich parallel zu dem Boden (16) des Raumes (14) des thermischen Speichers (12) erstrecken, wobei die Leitungsabschnitte (34a-f) voneinander unabhängig ausgebildet sind und an ihren oberen Enden im Bereich des oberen Endes (18) des Raumes (14) mit einer Vorrichtung (32) verbunden sind, über die den Leitungsabschnitten (34a-f) schrittweise das zweite Kühlmittel von oben nach unten in Abhängigkeit des gemessenen Drucks durch die Druckmesseinrichtung (10) zum Entladen des thermischen Speichers (12) zuführbar ist.

5. Einrichtung nach einem der Ansprüche 1 bis 4, wobei der Raum (14) des thermischen Speichers (12) von seinem Boden (16) bis zu seinem oberen Ende (18) eine sich nach oben erweiternde Querschnittsfläche aufweist.

6. Einrichtung nach Anspruch 5, wobei sich der Querschnitt des Raumes (14) des thermischen Speichers (12) von seinem Boden (16) nach oben hin stufenförmig vergrößert.

7. Einrichtung nach einem der Ansprüche 1 bis 6, wobei an der oberen Deckenwand des Raums (14) ein elastischer Körper angeordnet ist, der einen gasgefüllten, weiteren hermetisch dichten Raum bildet, wobei eine Seite des gasgefüllten, weiteren Raums von der oberen Deckenwand gebildet ist und der elastische Körper den weiteren, gasgefüllten Raum gegenüber den mit dem Phasenwechselmaterial gefüllten Raum (14) abdichtend trennt und in dem gasgefüllten, weiteren Raum die Druckmesseinrichtung (10) angeordnet ist.

8. Einrichtung nach einem der Ansprüche 1 bis 7, wobei die Messeinrichtung mit einer Steuereinheit verbunden ist.

9. Einrichtung nach einem der Ansprüche 1 bis 8, wobei das Phasenwechselmaterial ein Gemisch aus Wasser und Salzen oder Alkoholen mit oder ohne weiteren Zusätzen ist.
